# EUROPÄISCHE PATENTSCHRIFT

(11) **EP 0 450 436 B1**
(45) Veröffentlichungstag und Bekanntmachung des Hinweises auf die Patenterteilung: **15.06.1994**
(21) Anmeldenummer: 91104614.2
(22) Anmeldetag: 24.03.1991
(51) Int. Cl.: A01B 17/00, A01B 49/02

(54) **Bodenbearbeitungsgerät**
Soil cultivating implement
Machine pour le travail du sol

(30) Priorität: 24.03.1990 DE 4009493
(43) Veröffentlichungstag der Anmeldung: 09.10.1991
(73) Patentinhaber: Niebler, Martin, D-94363 Oberschneiding (DE)
(72) Erfinder: Niebler, Martin, D-94363 Oberschneiding (DE)
(74) Vertreter: Gustorf, Gerhard, Dipl.-Ing.

(56) Entgegenhaltungen:
- EP-A- 0 198 563
- DE-A- 2 058 538
- DE-A- 2 932 824
- DE-U- 8 624 526
- FR-A- 2 193 534
- FR-A- 2 229 339
- GB-A- 1 023 636

## Beschreibung

Die Erfindung betrifft ein Bodenbearbeitungsgerät mit einem Drehpflug, dessen Pflugrahmen um eine horizontale Achse schwenkbar an einem an einen Schlepper anbaubaren Drehturm gelagert ist und einen nach einer Seite abstehenden Zusatzrahmen für die um eine horizontale Achse schwenkbare Lagerung eines Zusatzgerätes aufweist.

Bodenbearbeitungsgeräte mit einem Drehpflug werden in immer größerem Umfang eingesetzt, um ein Feld für eine Neubestellung wirtschaftlich und zeitsparend vorzubereiten. Am Ende jeder Furchenreihe wird der Drehpflug vom Fahrersitz des Schleppers aus durch Betätigung eines Drehwerks um 180° geschwenkt, so daß der Schlepper in der benachbarten Furchenreihe zurückfahren kann. Auf diese Weise werden Leerfahrten vermieden, wobei die jeweils im Einsatz befindliche Pflughälfte die Erde, bezogen auf den Acker, immer in dieselbe Richtung kehrt. Für eine nachfolgende Bodenbearbeitung, beispielsweise die Saatbettbereitung oder die Aussaat, müssen die entsprechenden Geräte an den Schlepper angebaut werden; der Schlepper mit dem angebauten Gerät fährt dann erneut zur Bearbeitung über den Acker.

Ein Bodenbearbeitungsgerät der eingangs umrissenen Bauart ist aus der DE-OS 33 33 748 bekannt. Dabei besteht der nach einer Seite abstehende Zusatzrahmen aus einem L-förmigen Träger, dessen quer zur Arbeitsrichtung verlaufender Schenkel um eine zur Wendeachse des Pfluges parallele Achse schwenkbar an einem Ausleger des Pflugrahmens gelagert ist. Der rechtwinklig zu dem Schenkel verlaufende Längsholm des Trägers dient zur Aufnahme von Bearbeitungsgeräten, die ausnahmslos Bodenantrieb haben, beispielsweise eine Egge oder eine Walzenanordnung. Der Anbau zapfwellengetriebener Bodenbearbeitungsgeräte ist nicht möglich.

In der FR-A 2 229 339 ist eine Bodenbearbeitungskombination erläutert, bei der Arbeitsgeräte seitlich an einen Schlepper angebaut werden können. Unabhängig davon ist ein Pflug am hinteren Kraftheber des Schleppers angebaut.

Der Erfindung liegt die Aufgabe zugrunde, ein gattungsgemäßes Bodenbearbeitungsgerät zur Verfügung zu stellen, bei dem der Anbau des Zusatzgerätes am Zusatzrahmen einen eigenen Antrieb ermöglicht, so daß bei einmaligem Überfahren des Feldes eine einwandfreie und intensive Fertigbearbeitung des Bodens gewährleistet ist, wobei der Anbau des Zusatzgerätes weder bei der Koppelung mit dem Drehpflug noch beim Wendevorgang besondere bedienungs- oder gerätetechnische Maßnahmen erfordert.

Bei dem gattungsgemäßen Bodenbearbeitungsgerät wird diese Aufgabe erfindungsgemäß dadurch gelöst, daß am Zusatzrahmen ein Anbaubock mit einer Dreipunkt-Kupplungseinrichtung für das Zusatzgerät um eine zur horizontalen Schwenkachse des Drehpfluges parallele Achse frei schwenkbar gelagert ist, wobei der Anbaubock einen Zapfwellenantrieb für das Zusatzgerät aufweist und der Zusatzrahmen eine von der Schlepperzapfwelle abgeleitete Antriebseinrichtung für die Zapfwelle trägt.

Bei einer alternativen Lösung besteht die Antriebseinrichtung für das Zusatzgerät aus einem am Zusatzrahmen angebrachten Motor, vorzugsweise einem hydraulischen Motor.

Beide Lösungen haben den Vorteil, daß für die Koppelung des Zusatzgerätes mit dem Drehpflug keine eigens angepaßte Kupplungseinrichtung erforderlich ist, sondern ein an sich bekannter Anbaubock mit Dreipunkt-Kupplungseinrichtung eingesetzt wird, an den jedes handelsübliche Zusatzgerät angebaut werden kann. Dabei wird der weitere Vorteil erzielt, daß dieses Zusatzgerät von der Zapfwelle angetrieben werden kann, weshalb eine wesentlich bessere Bodenbearbeitung als bei Bearbeitungsgeräten mit Bodenantrieb möglich wird. Die frei schwenkbare Lagerung des Anbaubocks am Zusatzrahmen stellt sicher, daß das Zusatzgerät immer in seiner waagrechten Lage hängt, so daß selbst für den Schwenkvorgang in die um 180° gedrehte Arbeitsstellung kein Umrüsten erforderlich ist.

Die Antriebseinrichtung für das Zusatzgerät, beispielsweise eine Kreiselegge, ein Zinkenrotor, eine Bodenfräse oder eine Egge mit angebauter Drillmaschine, ist am Zusatzrahmen untergebracht. Diese Antriebseinrichtung kann, wie erwähnt, ein Motor sein, vorzugsweise ein hydraulischer Motor, der eine durch den Anbaubock hindurchgeführte Zapfwelle für den Antrieb des Zusatzgerätes hat.

Bei einer Variante der Erfindung besteht die Antriebseinrichtung aus einem mit der Zapfwelle des Schleppers kuppelbaren WellenGetriebe-Strang. Es ist auch möglich, daß die Antriebseinrichtung aus einem mit der Zapfwelle des Schleppers kuppelbaren Gelenkwellen-Kettentrieb-Übertragungsstrang besteht. Die Übertragungsstränge sind dabei so flexibel, daß sie bei der schwenkbaren Lagerung des Zusatzrahmens am Pflugrahmen die entsprechenden Bewegungen mitmachen können.

Um die horizontale Arbeitsstellung des Anbaubocks und damit des Zusatzgerätes verriegeln zu können, besteht die Möglichkeit, mit dem Anbaubock eine Gewindespindel zu verbinden, die über einen zum Zusatzrahmen parallelen Neigungslenker am Drehturm angelenkt ist. Dadurch wird eine Parallelogrammführung für den Anbaubock gebildet, dessen waagrechte Stellung durch die Gewindespindel von Hand eingestellt werden kann.

Bei einer anderen Ausführung ist zur Verriegelung des Anbaubocks ein Hydraulikzylinder vorgesehen, der sich einerseits am Zusatzrahmen und andererseits am Anbaubock abstützt. Zur Feineinstellung der im wesentlichen horizontalen Endlage des Anbaubocks sind an dessen beiden Seiten Stellschrauben angeordnet, denen ein fester Endanschlag am Zusatzrahmen zugeordnet ist.

In vorteilhafter Weiterbildung der Erfindung ist der Zusatzrahmen um eine vertikale Achse schwenkbar am Pflugrahmen gelagert. Mit dieser Maßnahme kann beim Pflügen entlang einer Feldgrenze oder einer Mauer der Zusatzrahmen nach Abbau des Zusatzgerätes um etwa 90° geschwenkt werden, so daß der Pflug ohne Abstand von der Feldbegrenzung oder Mauer pflügen kann. Beim Pflügen der anschließenden Furchenreihe wird dann der Zusatzrahmen wieder ausgeschwenkt, worauf das Zusatzgerät über eine Schnellkupplung erneut angebaut werden kann.

Die Erfindung ist nachstehend an Ausführungsbeispielen erläutert, die in der Zeichnung dargestellt sind. Es zeigen:
Figur 1 die Draufsicht eines Schleppers mit angebautem Bodenbearbeitungsgerät gemäß der Erfindung im Einsatz,
Figur 2 eine der Figur 1 entsprechende Darstellung der Bearbeitung der folgenden Furchenreihe,
Figur 3 eine Rückansicht des Bodenbearbeitungsgerätes ohne angebautes Zusatzgerät,
Figur 4 eine Variante der Figur 3,
Figur 5 eine vergrößerte Draufsicht des Bodenbearbeitungsgerätes in der in Figur 2 gezeigten Arbeitsstellung, wobei der Antriebsstrang mit dem starren Zusatzrahmen eingezeichnet sind,
Figur 6 eine der Figur 5 entsprechende Darstellung einer Variante in der Arbeitsstellung der Figur 1 mit schwenkbarem Zusatzrahmen,
Figur 7 eine der Figur 6 ähnliche Darstellung mit einer Variante des Antriebsstranges,
Figur 8 die schematische Draufsicht eines Teil des des Zusatzrahmens gemäß Figur 4 mit mechanischer Feineinstellung des Anbaubocks,
Figur 9 eine Seitenansicht in Richtung des Pfeiles IX der Fig. 8,
Figur 10 die Draufsicht einer Variante der Figur 8 mit hydraulisch verriegelbarem Anbaubock, der bei dem Bodenbearbeitungsgerät gemäß Figur 3 eingesetzt werden kann,
Figur 11 die Darstellung des Anbaubocks der Figur 10 in der rechts vom Schlepper wegragenden Arbeitsstellung,
Figur 12 die Vorderansicht des Anbaubocks in Richtung des Pfeiles XII der Figur 10,
Figur 13 die Seitenansicht des Anbaubocks der Figur 12,
Figur 14 die Rückansicht des Bodenbearbeitungsgerätes der Figur 3 in seiner um 90 geschwenkten Transportstellung und
Figur 15 die Seitenansicht des gemäß Figur 14 geschwenkten Bodenbearbeitungsgerätes in der Transportstellung.

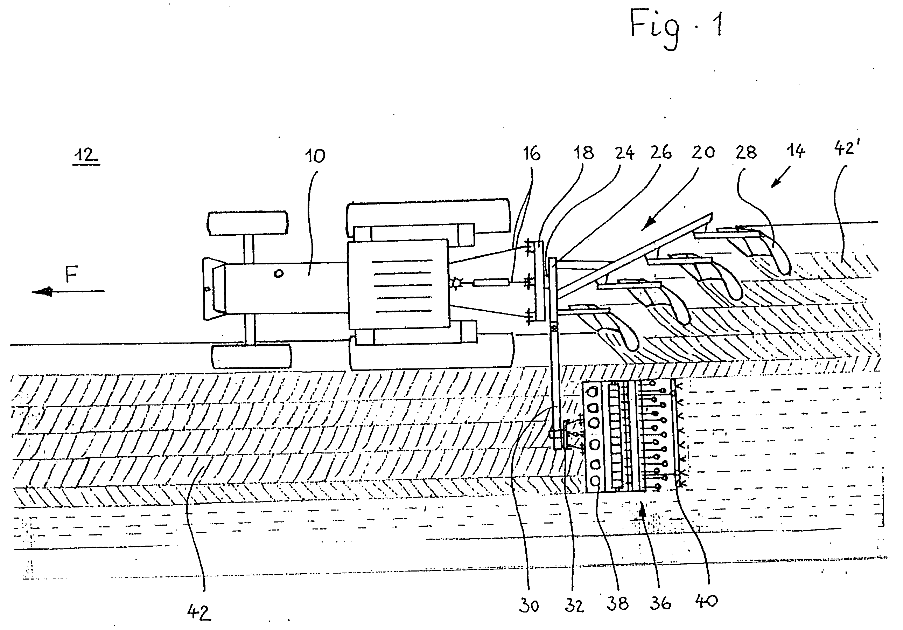

Figur 1 zeigt die Draufsicht eines Schleppers 10 bei der Bestellung eines Feldes 12 mit Hilfe eines gemäß der Erfindung ausgebildeten Bodenbearbeitungsgerätes 14. An den Dreipunkt-Kraftheber 16 des Schleppers 10 ist der Drehturm 18 eines herkömmlichen Drehpfluges 20 angebaut.

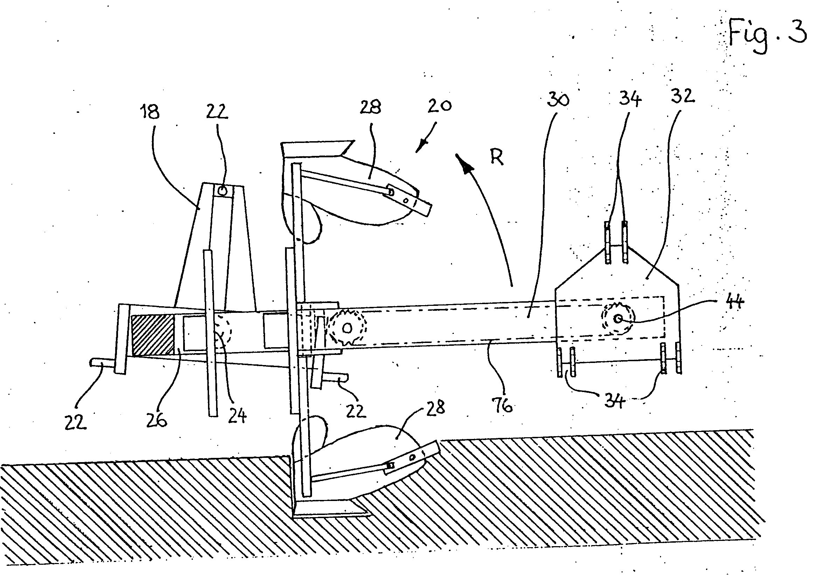

Die Rückansicht der Figur 3 zeigt den Drehturm 18 mit den Anbaupunkten 22 für den Dreipunkt-Kraftheber 16. Der Pflugrahmen 26 kann mittels der Drehwelle 24 relativ zum Drehturm 18 um eine horizontale Achse geschwenkt werden und trägt die beiden nach oben und unten abstehenden Pflughälften mit den Pflugscharen 28.

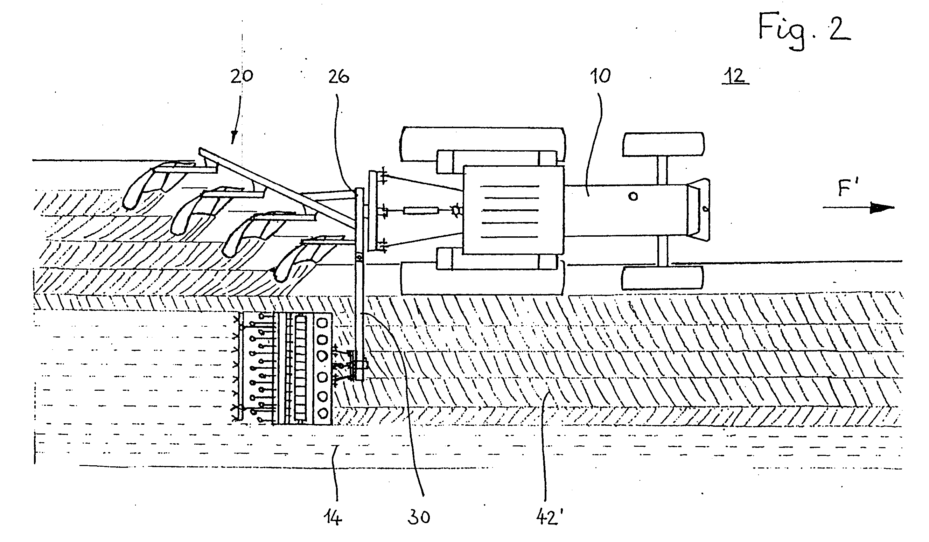

Der Pflugrahmen 26 ist mit einem Zusatzrahmen 30 verbunden, der nach einer Seite absteht und damit eine Verlängerung des Pflugrahmens 26 bildet. Am freien Ende trägt der Zusatzrahmen 30 einen Anbaubock 32 bekannter Bauart mit einem oberen und zwei unteren Kupplungspunkten 34 für den Anbau eines motorgetriebenen Zusatzgerätes 36. Gemäß den Figuren 1 und 2 besteht das Zusatzgerät 36 aus einer Kreiselegge 38 mit nachfolgender Drillmaschine 40. Als Zusatzgeräte 36 kommen je nach dem Einsatzfall auch andere Vorrichtungen in Frage, beispielsweise ein Zinkenrotor oder eine Bodenfräse.

In Figur 1 ist die Bestellung des Feldes 12 mit Hilfe des Bodenbearbeitungsgerätes 14 gemäß der Erfindung schematisch dargestellt. Die zuvor in einem ersten Arbeitsgang gepflügte Furchenreihe 42 wird bei dem anschließenden und in Figur 1 gezeigten Durchgang in Richtung der Fahrtrichtung F von dem Bodenbearbeitungsgerät 14 - hier die Kombination der Kreiselegge 38 mit der Drillmaschine 40 - bearbeitet, wobei gleichzeitig die Aussaat stattfindet, während die benachbarte Furchenreihe 42′ durch den Drehpflug 20 gepflügt wird. Nach dem Wenden am Ende des Feldes 12 bewegt sich der Schlepper 10 gemäß Figur 2 in die entgegengesetzte Fahrtrichtung F′ , wobei auch der Pflugrahmen 26 des Drehpfluges 20 um 180 gedreht worden ist. Mit der Drehung des Pflugrahmens 26 ist auch der Zusatzrahmen 30 auf die andere Seite des Schleppers 10 geschwenkt worden, so daß nun die zuvor gepflügte Furchenreihe 42′ (vgl. Figur 1) durch das Bodenbearbeitungsgerät 14 bearbeitet wird.

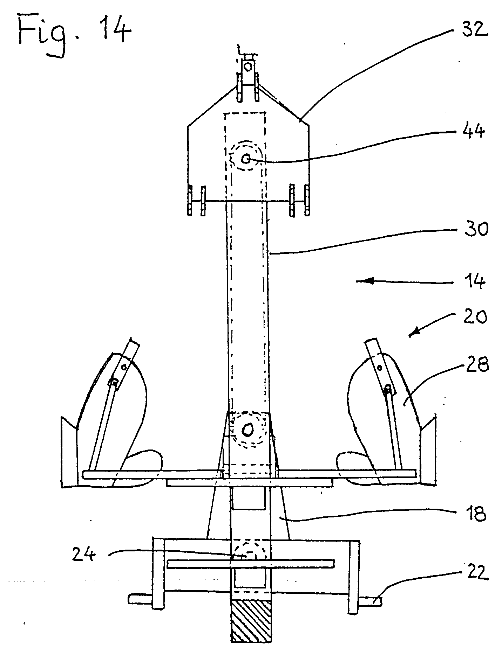

Aus der Darstellung der Figuren 3 und 14 ergibt sich, daß bei der Schwenkung des Pflugrahmens 26 mit dem starr daran befestigten Zusatzrahmen 30 um die horizontale Achse der Drehwelle 24 in Richtung des eingezeichneten Pfeiles R der Anbaubock 32 immer in seiner waagrechten Lage bleibt, da er um die horizontale Achse 44 frei schwenkbar am Zusatzrahmen 30 gelagert ist. Auf diese Weise erreicht der Anbaubock 32 mit dem angebauten Zusatzgerät 36 nach der Schwenkung des Drehpfluges 20 auf die andere Schlepperseite wieder eine waagrechte Lage.

In der beschriebenen Weise kann das Feld 12 in einem Durchgang vollständig bearbeitet werden - Pflügen, Saatbettbereitung, Säen -, ohne daß der Schlepper 10 es mehrmals überfahren muß.

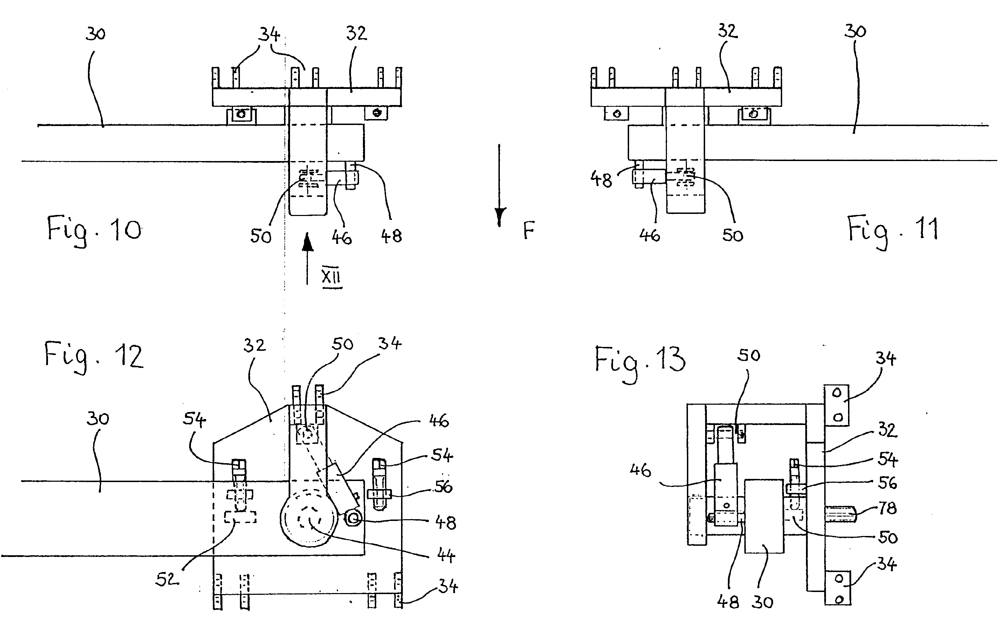

Um beim Beispiel der Figur 3 eine Verriegelung des Anbaubocks 32 in der horizontalen Stellung zu erreichen, kann gemäß den Figuren 10 bis 13 ein Hydraulikzylinder 46 vorgesehen werden, der sich einerseits über einen Bolzen 48 am Zusatzrahmen 30 und andererseits über einen weiteren Bolzen 50 am Anbaubock 32 abstützt. Während der Schwenkung des Drehpfluges 20 und mit diesem des Zusatzrahmens 30 ist der Hydraulikzylinder 46 drucklos, so daß sich der Anbaubock 32 aufgrund seines Eigengewichtes frei um die Achse 44 in seine waagrechte Lage drehen kann. Nach der Schwenkung in die in die links (Figur 10) oder rechts (Figur 11) vom Schlepper wegragende Stellung wird der Hydraulikzylinder 46 betätigt, so daß sein auf den Bolzen 50 wirkender Kolben den Anbaubock 32 gegen einen festen Endanschlag 52 dreht. An diesem Endanschlag 52 stützt sich eine Stellschraube 54 ab, die verdrehbar in einer Konsole 56 des Anbaubocks 32 sitzt. Über die Stellschraube 54 kann die genaue waagrechte Lage des Anbaubocks 32 feineingestellt werden. Wie die Figuren 10 bis 12 zeigen, hat der Anbaubock 32 zu beiden Seiten der Achse 44 eine derartige Stellschraube 54.

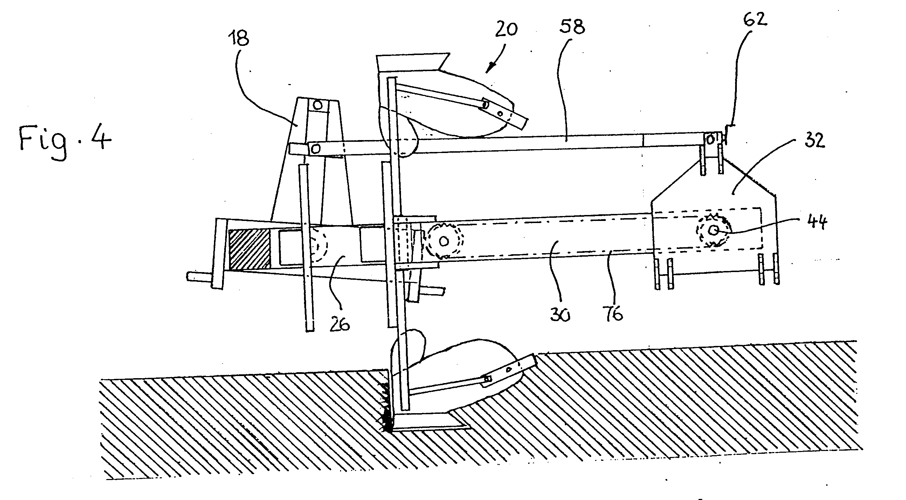

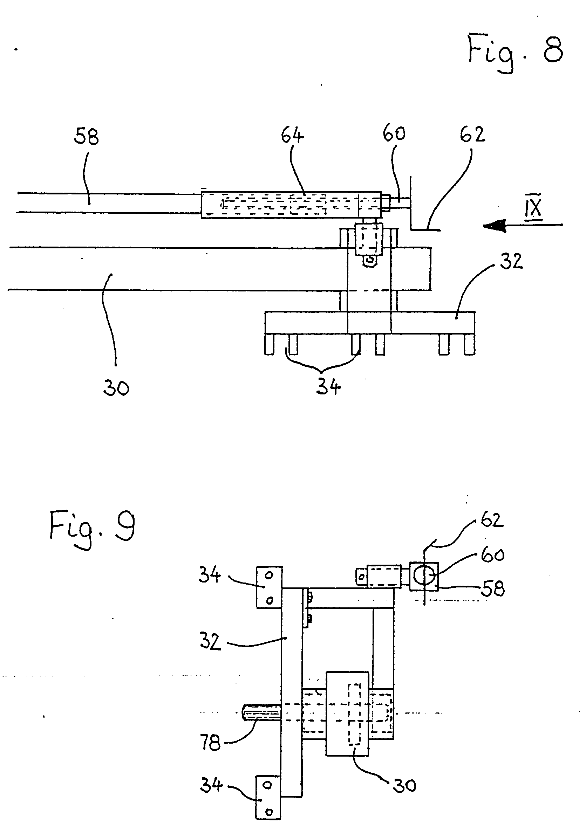

Die Figuren 4, 8 und 9 zeigen eine andere Möglichkeit der Verriegelung des Anbaubocks 32 in der horizontalen Stellung. Hier ist der Anbaubock 32 an seinem oberen Ende über einen Neigungslenker 58 mit dem Drehturm 18 gelenkig verbunden. Der Neigungslenker 58 verläuft dabei parallel zum Zusatzrahmen 30, so daß eine Parallelogrammführung für den Anbaubock 32 hergestellt ist. Zur Feineinstellung der horizontalen Lage des Anbaubocks 32 ist eine Gewindespindel 60 mit einem Handrad 62 vorgesehen, deren Gewinde in eine in Figur 8 angedeutete Stellmutter 64 des Neigungslenkers 58 eingreift.

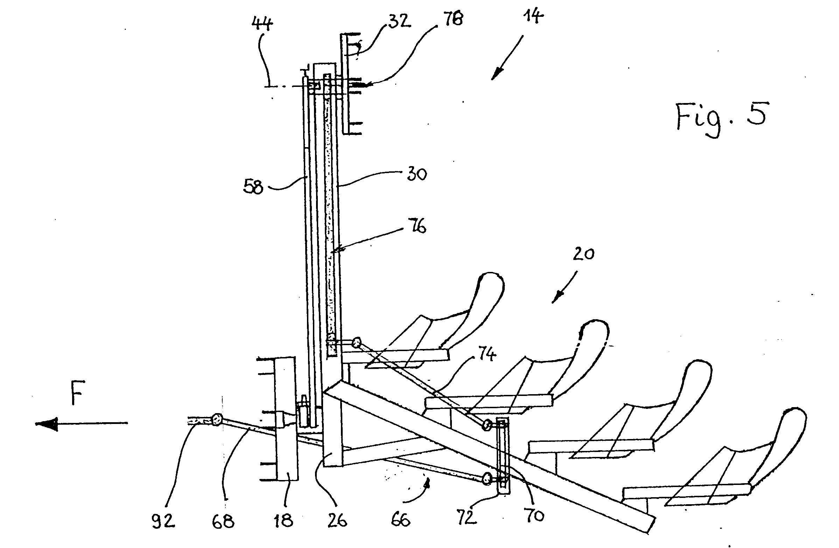

Figur 5 zeigt die schematische Draufsicht des Bodenbearbeitungsgerätes 14, bei dem der Pflugrahmen 26 des Drehpfluges 20 starr mit dem Zusatzrahmen 30 verbunden ist. Für den Drehantrieb des Zusatzgerätes 36, das an den Anbaubock 32 angebaut wird, ist ein Übertragungsstrang 66 vorgesehen, der eine mit der Schlepperzapfwelle 92 verbundene Gelenkwelle 68 aufweist. Diese führt zu einem Kettentrieb 70, welcher in einem geschlossenen Kettenkasten 72 untergebracht ist, der am Pflugrahmen 26 befestigt ist. Von dem Kettentrieb 70 führt eine weitere Gelenkwelle 74 zu einem zweiten Kettentrieb 76, der im Zusatzrahmen 30 integriert ist (vgl. auch Figuren 3 und 4). Der Kettentrieb 76 dient zum Antrieb einer Zapfwelle 78 (Drehachse 44), die durch den Anbaubock 32 hindurchgeführt ist (vgl. auch Figur 13) und an die die Antriebswelle des Zusatzgerätes 36 angeschlossen werden kann.

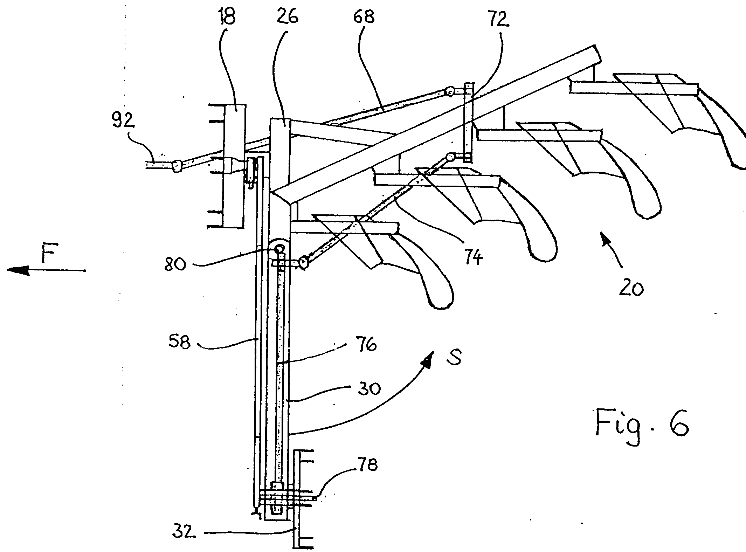

Die Variante der Figur 6 unterscheidet sich von dem Ausführungsbeispiel der Figur 5 dadurch, daß der Zusatzrahmen 30 um eine vertikale Achse 80 schwenkbar am Pflugrahmen 26 gelagert ist. Das hat gegenüber der starren Ausführung den Vorteil, daß der Zusatzrahmen 30 bei abgebautem Zusatzgerät 36 um die Achse 80 in Richtung des Pfeiles S der Figur 6 zum Drehpflug 20 hin geschwenkt werden kann. Dies ist insbesondere wesentlich beim Pflügen von an Feldbegrenzungen, Mauern o. dgl. angrenzenden Furchenreihen, wo der seitlich überstehende Zusatzrahmen 30 ein Pflügen unmittelbar an der Feldgrenze nicht erlauben würde. Nach Fertigstellung der Furchenreihe und Wenden des Schleppers am Feldende kann der Zusatzrahmen 30 wieder ausgeschwenkt werden, wonach über eine Schnellkupplung das Zusatzgerät 36 erneut an den Anbaubock 32 angebaut werden kann.

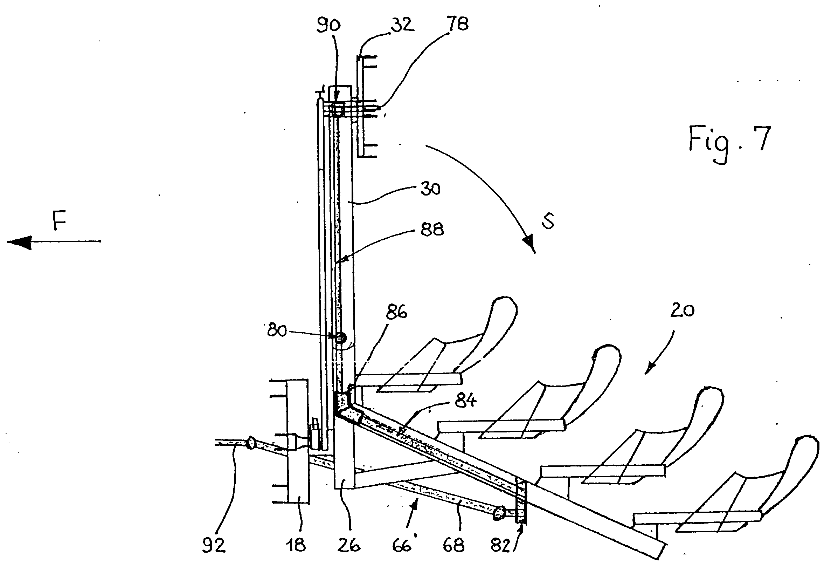

Eine weitere Variente mit einem ebenfalls schwenkbaren Zusatzrahmen 30 zeigt die Figur 7. Hier hat der Übertragungsstrang 66′ keine Kettentriebe, sondern die mit der Schlepperzapfwelle 92 verbundene Gelenkwelle 68 führt zu einem Verlagerungsgetriebe 82. Von diesem führt eine Welle 84 zu einem Winkelgetriebe 86, dessen Abtriebswelle 88 ein weiteres Winkelgetriebe 90 am freien Ende des Zusatzrahmens 30 antreibt. Das Winkelgetriebe 90 dient zum Antrieb der Zapfwelle 78 für das mit dem Anbaubock 32 gekoppelte Zusatzgerät 36.

Neben der Möglichkeit, das Zusatzgerät 36 über die Schlepperzapfwelle 92 anzutreiben, kann am Zusatzrahmen 30 oder am Anbaubock 32 ein Motor, vorzugsweise ein hydraulischer Motor, vorgesehen werden, dessen Abtriebswelle unmittelbar die Zapfwelle 78 für das Zusatzgerät 36 antreibt.

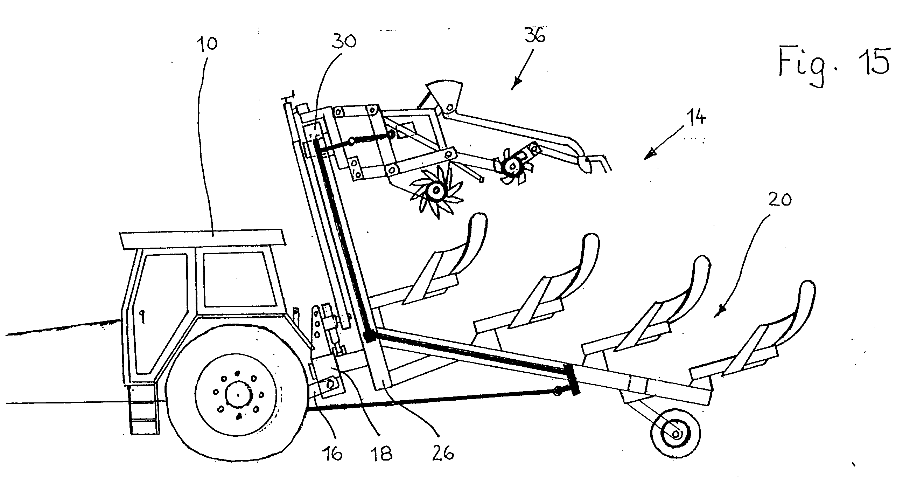

Die Figuren 14 und 15 zeigen das Bodenbearbeitungsgerät 14 gemäß der Erfindung in der Transportstellung. In dieser Stellung ist der Drehpflug 20 um 90 nach oben geschwenkt, so daß die beiden die Pflugschare 28 tragenden Hälften des Drehpfluges 20 waagrecht nebeneinanderliegen. Der Zusatzrahmen 30 steht vertikal nach oben, wobei der Anbaubock 32 aufgrund seines Eigengewichtes um die Achse 44 in eine waagrechte Lage gedreht ist.

Mit der Erfindung steht ein kombiniertes Bodenbearbeitungsgerät zur Verfügung, das eine wirtschaftliche, umweltfreundliche und zeitsparende Bodenbearbeitung ermöglicht. Mit Hilfe eines leistungsstarken Schleppers können in einem Arbeitsgang Pflügen, Bodenbearbeitung und Säen durchgeführt werden, so daß ein nochmaliges Überfahren des Feldes entbehrlich wird, was immer mit einer unerwünschten Bodenverdichtung verbunden ist. Da die Bodenbearbeitung einschließlich des Sävorganges in einem Arbeitsgang durchgeführt werden kann, können Trockenheit oder Regen die Aussaat kaum behindern. Beim Wenden des Drehpfluges am Ende jeder Furchenreihe wird auch das angebaute Zusatzgerät auf die richtige Seite gedreht, so daß es die bereits gepflügte Furchenreihe bearbeiten kann. Dies bedeutet eine erhebliche Einsparung von Arbeitszeit und Kraftstoff, so daß eine wirtschaftliche und umweltfreundliche Bodenbearbeitung erfolgt. Ein weiterer Vorteil ist darin zu sehen, daß die Schlepperzapfwelle bei der Arbeit auch während der Dreh- und Schwenkvorgänge eingeschaltet bleiben kann, so daß ein umständliches Aus- und Einschalten entfällt.

## Patentansprüche

1. Bodenbearbeitungsgerät mit einem Drehpflug (20), dessen Pflugrahmen (26) um eine horizontale Achse schwenkbar an einem an einen Schlepper (10) anbaubaren Drehturm (18) gelagert ist und einen nach einer Seite abstehenden Zusatzrahmen (30) für die um eine horizontale Achse (44) schwenkbare Lagerung eines Zusatzgerätes (36) aufweist, dadurch gekennzeichnet, daß am Zusatzrahmen (30) ein Anbaubock (32) mit einer Dreipunkt-Kupplungseinrichtung (34) für das Zusatzgerät (36) um eine zur horizontalen Schwenkachse des Drehpfluges (20) parallele Achse (44) frei schwenkbar gelagert ist, wobei der Anbaubock (32) einen Zapfwellenantrieb für das Zusatzgerät (36) aufweist und der Zusatzrahmen (30) eine von der Schlepperzapfwelle (92) abgeleitete Antriebseinrichtung für die Zapfwelle (78) trägt.

2. Bodenbearbeitungsgerät mit einem Drehpflug (20), dessen Pflugrahmen (26) um eine horizontale Achse schwenkbar an einem an einen Schlepper (10) anbaubaren Drehturm (18) gelagert ist und einen nach einer Seite abstehenden Zusatzrahmen (30) für die um eine horizontale Achse (44) schwenkbare Lagerung eines Zusatzgerätes (36) aufweist, dadurch gekennzeichnet, daß am Zusatzrahmen (30) ein Anbaubock (32) mit einer Dreipunkt-Kupplungseinrichtung (34) für das Zusatzgerät (36) um eine zur horizontalen Schwenkachse des Drehpfluges (20) parallele Achse (44) frei schwenkbar gelagert ist, wobei der Anbaubock (32) einen Zapfwellenantrieb für das Zusatzgerät (36) aufweist und der Zusatzrahmen (30) einen Motor, vorzugsweise einen hydraulischen Motor, für den Antrieb des Zusatzgerätes (76) trägt.

3. Bodenbearbeitungsgerät nach Anspruch 1, dadurch gekennzeichnet, daß die Antriebseinrichtung aus einem mit der Zapfwelle (92) des Schleppers (10) kuppelbaren Wellen-Getriebe-Strang (66′) besteht.

4. Bodenbearbeitungsgerät nach Anspruch 1, dadurch gekennzeichnet, daß die Antriebseinrichtung aus einem mit der Zapfwelle (92) des Schleppers (10) kuppelbaren Gelenkwellen-Kettentrieb-Übertragungsstrang (66) besteht.

5. Bodenbearbeitungsgerät nach einem der vorhergehenden Ansprüche, dadurch gekennzeichnet, daß der Anbaubock (32) in einer horizontalen Stellung verriegelbar ist.

6. Bodenbearbeitungsgerät nach Anspruch 5, dadurch gekennzeichnet, daß zur Verriegelung des Anbaubockes (32) mit diesem eine Gewindespindel (60) verbunden ist, die über einen zum Zusatzrahmen (30) parallelen Neigungslenker (58) am Drehturm (18) angelenkt ist.

7. Bodenbearbeitungsgerät nach Anspruch 5, dadurch gekennzeichnet, daß zur Verriegelung des Anbaubockes (32) ein Hydraulikzylinder (46) vorgesehen ist, der sich einerseits am Zusatzrahmen (30) und andererseits am Anbaubock (32) abstützt.

8. Bodenbearbeitungsgerät nach Anspruch 7, dadurch gekennzeichnet, daß zur Feineinstellung einer horizontalen Endlage des Anbaubocks (32) an dessen beiden Seiten Stellschrauben (54) angeordnet sind, denen ein fester Endanschlag (52) am Zusatzrahmen (30) zugeordnet ist.

9. Bodenbearbeitungsgerät nach einem der vorhergehenden Ansprüche, dadurch gekennzeichnet, daß der Zusatzrahmen (30) um eine vertikale Achse (80) schwenkbar am Pflugrahmen (26) gelagert ist.

## Claims

1. A soil-cultivating implement with a turnover plough (20), the plough frame (26) thereof being mounted, so as to be pivotable about a horizontal axis, on a rotary upright member (18) which can be built on to a tractor (10), and having an additional frame (30) projecting to one side, for mounting an additional implement (36) so as to be pivotable about a horizontal axis (44), **characterised in that** an external stand (32), with a three-point coupling device (34) for the additional implement (36), is mounted on the additional frame (30) so as to be freely pivotable about an axis (44) parallel to the horizontal pivoting axis of the turnover plough (20), the external stand (32) having a power take-off for the additional implement (36), and the additional frame (30) supporting a drive device, derived from the tractor power take-off (92), for the power take-off shaft (78).

2. A soil-cultivating implement with a turnover plough (20), the plough frame (26) thereof being mounted, so as to be pivotable about a horizontal axis, on a rotary upright member (18) which can be built on to a tractor (10), and having an additional frame (30) projecting to one side, for mounting an additional implement (36) so as to be pivotable about a horizontal axis (44), **characterised in that** an external stand (32), with a three-point coupling device (34) for the additional implement (36), is mounted on the additional frame (30) so as to be freely pivotable about an axis (44) parallel to the horizontal pivoting axis of the turnover plough (20), the external stand (32) having a power take-off for the additional implement (36), and the additional frame (30) supporting a motor, preferably a hydraulic motor, for powering the additional implement (76) [*sic*].

3. A soil-cultivating implement in accordance with claim 1, **characterised in that** the drive device comprises a shaft-gearing line (66′) which can be coupled to the power take-off shaft (92) in the tractor (10).

4. A soil-cultivating implement in accordance with claim 1, **characterised** **in** **that** the drive device comprises a propeller shaft-chain drive transmission line (66) which can be coupled to the power take-off shaft (92) in the tractor (10).

5. A soil-cultivating implement in accordance with one of the preceding claims, **characterised in that** the external stand (32) can be bolted in a horizontal position.

6. A soil-cultivating implement in accordance with claim 5, **characterised in that** a threaded spindle (60) is connected to the external stand (32) to bolt the same, and is articulated on the rotary upright member (18) via an inclination guide arm (58) parallel to the additional frame (30).

7. A soil-cultivating implement in accordance with claim 5, **characterised in** **that** a hydraulic cylinder (46) is provided to bolt the external stand (32), and is supported at one side on the additional frame (30) and at the other side on the external stand (32).

8. A soil-cultivating implement in accordance with claim 7, **characterised in that** adjusting screws (54) are arranged on both sides of the external stand (32) for fine adjustment of a final horizontal position thereof, and a fixed end stop device (52) on the additional frame (30) is associated with the said screws.

9. A soil-cultivating implement in accordance with one of the preceding claims, **characterised in that** the additional frame (30) is mounted on the plough frame (26) so as to be pivotable about a vertical axis (80).

## Revendications

1. Machine pour le travail du sol comportant une charrue brabant (20), dont le bâti (26) est monté pivotant autour d'un axe horizontal sur une tourelle (18) pouvant être attelée à un tracteur (10), et qui présente un châssis supplémentaire (30) en saillie sur un côté pour un montage pivotant autour d'un axe horizontal (44) d'une machine supplémentaire (36), caractérisée en ce qu'un chevalet (32) présentant un dispositif d'attelage à trois points (34) pour la machine supplémentaire (36) est monté sur le châssis supplémentaire (30) librement pivotant autour d'un axe (44) parallèle à l'axe de rotation horizontal de la charrue brabant (20), le chevalet (32) comportant un entraînement par prise de force pour la machine supplémentaire (36) et le châssis supplémentaire (30) portant un dispositif d'entraînement dérivé de la prise de force (92) du tracteur pour la prise de force (78) du chevalet.

2. Machine pour le travail du sol comportant une charrue brabant (20), dont le bâti (26) est monté pivotant autour d'un axe horizontal sur une tourelle (18) pouvant être attelée à un tracteur (10), et qui présente un châssis supplémentaire (30) en saillie sur un côté pour un montage pivotant autour d'un axe horizontal (44) d'une machine supplémentaire (36), caractérisée en ce qu'un chevalet (32) présentant un dispositif d'attelage à trois points (34) pour la machine supplémentaire (36) est monté sur le châssis supplémentaire (30) librement pivotant autour d'un axe (44) parallèle à l'axe de rotation horizontal de la charrue brabant (20), le chevalet (32) comportant un entraînement par prise de force pour la machine supplémentaire (36) et le châssis supplémentaire (30) portant un moteur, de préférence hydraulique, pour l'entraînement de la machine supplémentaire (36).

3. Machine pour le travail du sol selon la revendication 1, caractérisée en ce que le dispositif d'entraînement est constitué d'une ligne de transmission par arbre (66′) pouvant être couplée avec la prise de force (92) du tracteur (10).

4. Machine pour le travail du sol selon la revendication 1, caractérisée en ce que le dispositif d'entraînement est constitué d'une ligne de transmission par chaîne et par arbre articulé (66) pouvant être couplée avec la prise de force (92) du tracteur (10).

5. Machine pour le travail du sol selon l'une des revendications précédentes, caractérisée en ce que le chevalet (32) est verrouillable en une position horizontale.

6. Machine pour le travail du sol selon la revendication 5, caractérisée en ce que, pour le verrouillage du chevalet (32), une broche filetée (60) est liée à celui-ci, laquelle broche est articulée sur la tourelle (18) au moyen d'un bras d'inclinaison (58) parallèle au châssis supplémentaire (30).

7. Machine pour le travail du sol selon la revendication 5, caractérisée en ce qu'un vérin hydraulique (46) prenant appui sur le châssis supplémentaire (30) d'une part et sur le chevalet (32) d'autre part est prévu pour le verrouillage du chevalet (32).

8. Machine pour le travail du sol selon la revendication 7, caractérisée en ce que des vis de réglage (54) sont disposées des deux côtés du chevalet (32) pour un réglage fin de la position extrême horizontale de celui-ci, une butée d'extrémité (52) fixe sur le châssis supplémentaire (30) étant associée aux vis de réglage.

9. Machine pour le travail du sol selon l'une des revendications précédentes, caractérisée en ce que le châssis supplémentaire (30) est monté pivotant autour d'un axe vertical (80) sur le bâti de charrue (26).
